# EUROPÄISCHE PATENTSCHRIFT

(11) **EP 0 892 124 B1**
(45) Veröffentlichungstag und Bekanntmachung des Hinweises auf die Patenterteilung: **28.04.2004**
(21) Anmeldenummer: 98112414.2
(22) Anmeldetag: 03.07.1998
(51) Int. Cl.: E04D 3/16, E04D 3/30, E04G 21/30, C09J 7/02

(54) **Abziehbare Schutzfolie für Blechbahnen oder Blechstreifen**
Peelable protective sheet for metal sheets or strips
Feuille de protection pelable pour tôles ou lamelles de tôle

(30) Priorität: 14.07.1997 DE 19730160
(43) Veröffentlichungstag der Anmeldung: 20.01.1999
(73) Patentinhaber: ALCAN DEUTSCHLAND GMBH, D-37075 Göttingen (DE)
(72) Erfinder: Binder, Wulf, 37079 Göttingen (DE); Bässe, Hans-Wilhelm, Dipl.-Ing., 34266 Niestetal (DE)
(74) Vertreter: Füchsle, Klaus, Dipl.-Ing.

(56) Entgegenhaltungen:
- DE-U- 9 011 117
- US-A- 4 897 293
- PATENT ABSTRACTS OF JAPAN vol. 1997, no. 11, 28. November 1997 (1997-11-28) & JP 09 176580 A (SEKISUI CHEM CO), 8. Juli 1997 (1997-07-08)
- PATENT ABSTRACTS OF JAPAN vol. 1996, no. 07, 31. Juli 1996 (1996-07-31) & JP 08 073822 A (SEKISUI CHEM CO), 19. März 1996 (1996-03-19)

## Beschreibung

Die Erfindung betrifft eine Schutzfolie, die zum Oberflächenschutz auf Blechbahnen oder Blechstreifen mit einer Oberflächenbeschichtung in Form einer Lackierung oder dergleichen aufgeklebt ist.

Solche im Bandbeschichtungsverfahren beschichteten Bleche werden im Industrie- und Bauwesen nach unterschiedlichster Weiterbearbeitung zu den verschiedensten Zwecken eingesetzt. Die in der Regel aus Kunststoff bestehende Schutzfolie dient dabei dazu, die meist empfindliche Oberflächenbeschichtung der Bleche vor Beschädigungen während des Transportes und der Weiterverarbeitung zu schützen. Dies ist zum Beispiel . besonders wichtig bei Blechen für Dach- und Wandverkleidungen, bei denen das Begehen der zu verlegenden Bleche während der Montage unvermeidlich ist. Nach der Montage der Bleche wird die Schutzfolie in der Regel abgezogen und die Oberflächenbeschichtung der Bleche freigelegt.

Die herkömmlich verwendeten Schutzfolien bestehen typischerweise aus einer Polyethylenfolie, die auf der einen Seite mit einem Haftkleber beschichtet und auf der anderen Seite mit einem Werbeaufdruck bedruckt und mit einem sog. Releaselack (z.B. Urethanamid- oder Carbamidlack) abgedeckt sind. Der Haftkleber ermöglicht das Aufkleben der Schutzfolien auf die zu schützende und ggf. beschichtete Oberfläche der Blechbahn oder des Blechstreifens. Der Releaselack dient einerseits zur Verminderung der Haftung zwischen den Folienlagen im Coil und damit zur Verringerung des Abrollwiderstandes der Folien, andererseits als Sperrschicht zur Vermeidung von Farbdiffusion aus der Folienbedruckung auf Kontaktflächen.

Im DE-G 90 11 117.6 wird die Verwendung von abziehbaren Schutzfolien zum Schutz der Oberflächen von vorlackierten Blechbahnen bei der Montage als Dach- oder Wandverkleidung beschrieben. Diese herkömmlich bekannten Schutzfolien haben den Nachteil, daß sie, insbesondere bei Nässe, nicht rutschfest sind. Beim Begehen von Dacheindeckungen mit derartigen Schutzfolien besteht darum eine erhebliche Unfallgefahr, bei größeren Dachneigungen sogar schon bei trockener Folienoberfläche. Die Rutschneigung einer typischerweise verwendeten Schutzfolie ist bedingt durch die für den Folienaufbau verwendeten Materialien. So hat der Releaselack, der die bei der Montagearbeit begangene Oberfläche bedeckt, naturgemäß einen geringen Gleitreibungskoeffizienten von µ_{d}=0,35 bis 0,38, d.h. er hat die für die Montage unerwünschte Wirkung einer Gleitschicht. Der Gleitreibungskoeffizient µ_{D} (Gleitreibungszahl) wird nach DIN 53375 B bestimmt. Auch die häufig verwendeten Polyethylenfolien selbst besitzen nur einen geringen Gleitreibungskoeffizienten, d.h. selbst ohne Releaselackabdeckung würde eine Polyethylenfolie rutschgefährlich sein, was auch dadurch verdeutlicht wird, daß Polyethylenfolien in der Literatur als Gleitfolien bezeichnet werden.

Das Dokument US 4,897,293 A offenbart ebenfalls eine Schutzfolie. Die Oberfläche der Schutzfolie wird gegen das Abrutschen aufgerauht.

Der Erfindung liegt daher das technische Problem zugrunde, Schutzfolien zum Oberflächenschutz von vorlackierten Blechen für Dach- und Wandverkleidungen zur Verfügung zu stellen, die eine Rutschgefahr beim Begehen der Schutzfolie weitgehend ausschließen und abziehbar sind.

Dieses Problem wird erfindungsgemäß dadurch gelöst, daß die zum Begehen bestimmte Oberfläche der Schutzfolie so ausgestattet ist, daß sie einen Gleitreibungskoeffizienten von mindestens µ_{D}=0,6 und vorzugsweise von mindestens µ_{D}=0,8 hat. Die Schutzfolie ist abziehbar und bevorzugt selbsthaftend.

Die Schutzfolie ist anstelle des herkömmlich verwendeten Releaselackes mit einem Abdecklack versehen. Durch den Abdecklack können gleichzeitig die bekannten Eigenschaften des geringen Abrollwiderstandes des Coils sowie der Sperrwirkung der Oberfläche gegen Farbdiffusion bewahrt werden. Der Abdecklack ist integraler Bestandteil der Schutzfolie und dient dazu, der Folienoberfläche die gewünschten Eigenschaften zu verleihen, wenn das Grundmaterial der Schutzfolie diese Eigenschaften nicht schon selber besitzt.

Es ist ebenfalls möglich, daß der Abdecklack auf einer geeigneten Zwischen- oder Sperrschicht aufgetragen ist, um z.B. die Farbdiffusion aus der Folienbedruckung auf Kontaktflächen zu vermeiden.

Als Abdecklack wird bevorzugt ein Lack verwendet, der in der Festkörpermasse aus aliphatischen Polyamiden auf Basis mehrfach ungesättigter Fettsäuren besteht. Es kann ebenfalls bevorzugt sein, als Abdecklack einen Lack auf Polyurethanbasis mit PVC-Antigleitölen zu verwenden. Im Abdecklack wird ein Polyamidzuschlag in Pulverform verwendet, wobei der Polyamidanteil im Lack nicht oder nur nur unvollständig in Lösung geht, so daß die nicht gelösten Polyamidpartikel bei Trocknung des Abdecklackes eine gewisse Rauhigkeit an der zum Begehen bestimmten Oberfläche des Abdecklacks bewirken.

Der Abdecklack ist in einem Punkt- oder Linienraster direkt auf der Schutzfolienoberfläche aufgebracht.

In einer weiteren Ausführungsform besitzt die Schutzfolie eine besonders erzeugte Oberflächenstrukturierung, die bevorzugt durch Prägewalzen oder Einbringen körniger Substanzen in die Grundmasse der Schutzfolie erzeugt ist. Um den Abrollwiderstand im Foliencoil nicht unerwünscht zu steigern, kann es auch hier vorteilhaft sein, daß die Oberflächenstrukturierung der Schutzfolie nur rasterförmig oder örtlich begrenzt ausgeführt ist.

In einer weiteren, vorteilhaften Ausführungsform enthält die in der Regel aus Polyethylen bestehende Schutzfolie selber Zuschläge von Polyamiden, wobei deren Gehalt in geeigneter Weise angepaßt wird, um einen hinreichend hohen Gleitreibungskoeffizienten zu erhalten. Hier sind ebenfalls die oben genannten Polyamidzuschläge in Pulverform einsetzbar. Alternativ besteht die Schutzfolie vollständig aus einem Polyamid. Diese Möglichkeiten können insbesondere dann in Frage kommen, wenn auf eine Oberflächenbedruckung der Schutzfolie verzichtet wird, also eine Diffusionssperre für Farbstoffe nicht erforderlich ist.

Zusätzlich zur erfindungsgemäßen Ausführung der Schutzfolie ist es möglich, die Schutzfolie mit linienförmig angeordneten Perforationen oder dergleichen Materialschwächungen zu versehen, die zum Abtrennen eines an die Perforationslinien angrenzenden Folienbereichs von den übrigen Bereichen der Schutzfolie bestimmt und ausgebildet sind. Diese Ausbildung ermöglicht es, auf einfache Weise Streifen der Schutzfolie in genau dem erforderlichen Ausmaß von der zu schützenden, beschichteten Blechoberfläche abzuziehen und dabei nicht nur mit ihrer Klebeseite nach oben umzuschlagen, sondern völlig zu entfernen. Somit können Falzverbindungen zwischen oberflächenbeschichteten und mit einer Schutzfolie beklebten Blechen ausgeführt werden, ohne daß die Schutzfolie in die Falznaht eingearbeitet und dort verbleibend verklemmt wird oder daß die vor dem Falzen zurückgefaltete Schutzfolie bei den weiteren Arbeiten hinderlich ist und als Schmutzfänger wirkt oder weiter abgezogen wird als notwendig.

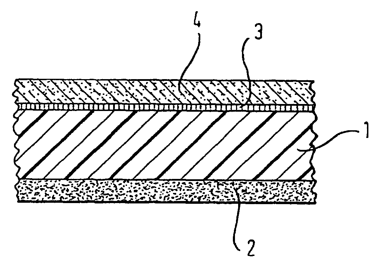

In der einzigen Figur ist schematisch ein Schnitt durch eine bevorzugte Ausführungsform der erfindungsgemäßen Schutzfolie dargestellt. Die Polyethylenfolie 1 ist auf der dem Blech zugewandten Seite mit einer Haftkleberschicht 2 und auf der zum Begehen bestimmten Seite mit einem Aufdruck 3 und einer Abdecklackschicht 4 versehen.

## Patentansprüche

1. Abziehbare Schutzfolie (1) für Blechbahnen oder Blechstreifen, **dadurch gekennzeichnet, daß** die zum Begehen bestimmte Oberfläche der Schutzfolie (1) mit einem Abdecklack (4) in einem Punkt- oder Linienraster versehen ist, der einen Gleitreibungskoeffizienten µ_{D} von 0,6 oder mehr, vorzugsweise 0,8 oder mehr, besitzt und Polyamidzuschläge in Pulverform enthält, die im Abdecklack nicht oder nur unvollständig löslich sind.

2. Schutzfolie gemäß Anspruch 1, **dadurch gekennzeichnet, daß** der Abdecklack (4) auf einer Zwischenschicht aufgebracht ist.

3. Schutzfolie gemäß Anspruch 1 oder 2, **dadurch gekennzeichnet, daß** der Abdecklack (4) auf aliphatischen Polyamiden auf Basis mehrfach ungesättigter Fettsäuren oder auf Polyurethan mit PVC-Antigleitölen basiert.

4. Schutzfolie gemäß Anspruch 1, **dadurch gekennzeichnet, daß** die zum Begehen bestimmte Oberfläche der Schutzfolie (1) mit einer Oberflächenstrukturierung versehen ist.

5. Schutzfolie gemäß Anspruch 4, **dadurch gekennzeichnet, daß** die zum Begehen bestimmte Oberfläche der Schutzfolie (1) mit einer rasterförmig oder örtlich begrenzten Oberflächenstrukturierung versehen ist.

6. Schutzfolie gemäß Anspruch 1, **dadurch gekennzeichnet, daß** das Material der Schutzfolie (1) ein Polyamid umfaßt.

7. Verwendung der Schutzfolie nach einem der Ansprüche 1 bis 6 als wiederabziebarer Gleitschutz auf begehbaren Blechbahnen oder Blechstreifen.

## Claims

1. Peelable protective film (1) for metal sheets or metal strips, **characterised in that** the surface of the protective film (1) intended for walking on is provided with a covering lacquer (4) in a point or line grid pattern which has a coefficient of sliding friction µ_{D} of 0.6 or more, preferably 0.8 or more, and contains polyamide additives in powder form which are insoluble or only partially soluble in the covering lacquer.

2. Protective film according to Claim 1, **characterised in that** the covering lacquer (4) is applied to an intermediate layer.

3. Protective film according to Claim 1 or 2,
**characterised in that** the covering lacquer (4) is based on polyunsaturated fatty acid-based aliphatic polyamides or on polyurethane with PVC antislip oils.

4. Protective film according to Claim 1, **characterised in that** the surface of the protective film (1) intended for walking on is provided with surface texturing.

5. Protective film according to Claim 4, **characterised in that** the surface of the protective film (1) intended for walking on is provided with surface texturing limited in the form of a grid pattern or locally.

6. Protective film according to Claim 1, **characterised in that** the material of the protective film (1) comprises a polyamide.

7. Use of the protective film according to one of Claims 1 to 6 as a removable antislip device on metal sheets or metal strips upon which it is possible to walk.

## Revendications

1. Film de protection pelliculable (1) pour des panneaux de tôles ou des bandes de tôle, **caractérisé en ce que** la surface supérieure du film de protection (1), particulièrement adaptée, est dotée d'un vernis de finition (4) comportant une trame de points ou de lignes, lequel vernis de finition a un coefficient de friction par glissement µ_{D} de 0,6 ou plus, de préférence de 0,8 ou plus, et contient des additifs de polyamide sous forme de poudre, lesquels additifs ne sont pas solubles dans le vernis de finition ou ne sont solubles que de façon partielle.

2. Film de protection selon la revendication 1, **caractérisé en ce que** le vernis de finition (4) est appliqué sur une couche intermédiaire.

3. Film de protection selon la revendication 1 ou 2, **caractérisé en ce que** le vernis de finition (4) est à base de polyamides aliphatiques, à base d'acides gras plusieurs fois poly-insaturés ou à base de polyuréthane associé à des huiles antidérapantes combinées à du PVC.

4. Film de protection selon la revendication 1, **caractérisé en ce que** la surface supérieure du film de protection (1), particulièrement adaptée, est dotée d'une structuration de surface supérieure.

5. Film de protection selon la revendication 4, **caractérisé en ce que** la surface du film supérieure de protection (1), particulièrement adaptée, est dotée d'une structuration de surface supérieure en forme de trame ou limitée localement.

6. Film de protection selon la revendication 1, **caractérisé en ce que** le matériau du film de protection (1) comprend un polyamide.

7. Utilisation du film de protection selon l'une quelconque des revendications 1 à 6, servant de protection antidérapante, d'un type repelliculable, sur des panneaux de tôles ou des bandes de tôle.
